# EUROPEAN PATENT SPECIFICATION

(11) **EP 4 487 960 B1**
(45) Date of publication and mention of the grant of the patent: **25.11.2026**
(21) Application number: 24185418.1
(22) Date of filing: 28.06.2024
(51) Int. Cl.: B02C 13/06, B02C 13/28, B02C 18/14, B02C 18/18, B02C 21/02

(54) **ROTARY MATERIAL REDUCTION TOOL**
ROTIERENDES MATERIALREDUZIERUNGSWERKZEUG
OUTIL DE RÉDUCTION DE MATÉRIAU ROTATIF

(30) Priority: 06.07.2023 US 202363512197 P
(43) Date of publication of application: 08.01.2025
(73) Proprietor: Vermeer Manufacturing Company, Pella, IA 50219 (US)
(72) Inventor: VERZILLI, Claudio, Pella, 50219 (US); ROOZEBOOM, Keith, Pella, 50219 (US)
(74) Representative: Forresters IP LLP

(56) References cited:
- EP-B1- 1 028 808
- WO-A1-2015/038619
- US-A1- 2014 239 105
- US-B2- 11 338 298

## Description

### CROSS-REFERENCE TO RELATED APPLICATIONS

This application claims benefit of priority to co-pending U.S. Provisional Patent Application No. 63/512,197, filed July 6, 2023.

### TECHNICAL FIELD

This present disclosure relates to material reducing machines such as grinders, shredders, and chippers.

### BACKGROUND

Material reducing machines are used to reduce the size of material such as waste material. Example waste materials include waste wood (e.g., trees, brush, stumps, pallets, railroad ties, etc.), peat moss, paper, wet organic materials, industrial waste, garbage, construction waste, and the like. A typical material reducing machine such as a grinder, a chipper, or a shredder includes a rotor to which a plurality of reducers (e.g., teeth, cutters, blades, grinding tips, chisels, etc.) are mounted. The reducers are typically mounted about the circumference of the rotor and are carried with the rotor about an axis of rotation of the rotor as the rotor is rotated. During reducing operations, the rotor is rotated, and waste material is fed adjacent to the rotor such that contact between the reducers and the waste material provides a reducing or comminuting action with respect to the waste material.

Grinders and chippers typically are configured to reduce material through direct impact of the reducers against the material. In contrast, shredders are commonly configured such that the reducers operate in cooperation with a comb structure which intermeshes with the reducers as the rotor rotates. In the operation of a typical shredder, material fed into the shredder is forced through the comb structure by the reducers as the rotor rotates thereby providing a shredding action. It will be appreciated that during reducing operations, the rotors of grinders and chippers typically operate at higher rotational speeds than the rotors of shredders.

The reducing rotors of material reducing machines are subjected to extreme loads. Although the loading differs, due to the differing speeds, the reducing rotor must be robustly designed to withstand the loads. Further, the reducing rotor and its attached components, such as hammers and cutters, can experience high rates of wear, particularly if the waste material is abrasive. For this reason, attached components are typically replaceable.

EP1028808B1 (D1) discloses a pulverizing system for reducing the size of material including a body, a pair of rotating members at least partially disposed within said body, and at least one impeller arm attached to each of said rotating members. The impeller arm attached to one of the rotating member throws material into a substantially head-on collision with material thrown by the impeller arm attached to the other rotating member.

WO2015038619A1 (D2) discloses a hammer support system for a rotary tool has a hammer receiver including a first alignment opening having a first curved alignment surface. A first wedge part has a curved surface, and a second wedge part is configured to interact with the first wedge part. A fastener is provided for drawing down the first wedge part against the second wedge part such that the curved surface of the first wedge part engages the first curved alignment surface to self-align the first and second wedge parts as the first wedge part is drawn down by the fastener.

US2014239105A1 (D3) discloses a radially projecting member (e.g., a paddle assembly) including a pin having a head; a paddle pivotally engaged to the head; and a shear member engaged to the head and to the paddle, the shear member being constructed and arranged to fracture to permit pivotal rotation of the paddle relative to the head.

### SUMMARY

Features of the invention are set out in the independent claims. Optional features of the invention are set out in the dependent claims.

### BRIEF DESCRIPTION OF THE DRAWINGS

FIG. 1 is a rear perspective view of a material reducing machine according to one embodiment of the present disclosure.
FIG. 2 is another rear perspective view of the material reducing machine of FIG. 1.
FIG. 3 is a top view of the material reducing machine of FIG. 1.
FIG. 4 is a front perspective view of a reducing rotor system according to an embodiment of the present disclosure.
FIG. 5 is a rear perspective view of the reducing rotor system of FIG. 4.
FIG. 6 is a top view of the reducing rotor system of FIG. 4.
FIG. 7 is a front perspective view of the reducing rotor system of FIG. 4 with the end cap removed.
FIG. 8 is an end view of reducing rotor system of FIG. 7.
FIG. 9 is a perspective view of the drum of the reducing rotor system of FIG. 4.
FIG. 10 is a perspective view of a wear plate of the reducing rotor system of FIG. 4.
FIG. 11 is a top view of the wear plate of FIG. 10.
FIG. 12 is a perspective view of a collar of the reducing rotor system of FIG. 4.
FIG. 13 is a top view of the collar of FIG. 12.
FIG. 14 is a side view of the collar of FIG. 12.
FIG. 15 is a bottom perspective view of the collar of FIG. 12.
FIG. 16 is a side view of the collar of FIG. 12 with an extension.
FIG. 17 is an end view of the collar of FIG. 16.
FIG. 18 is a bottom perspective view of the collar of FIG. 16.
FIG. 19 is a cross-section of the collar taken along the line 19-19 of FIG. 17.
FIG. 20 is a perspective view of a rotor weldment of the reducing rotor system of FIG. 4.
FIG. 21 is an end view of the rotor weldment of FIG. 20.
FIG. 22 is a detailed view of the reducing rotor system of FIG. 7.
FIG. 23 is an exploded end view of the reducing rotor system of FIG. 22.
FIG. 24 is a detailed view of a portion of the exploded end view of FIG. 23.
FIG. 25 is an exploded perspective view of the reducing rotor system of FIG. 7.
FIG. 26 is a cross-section of the reducing rotor system taken along the line 26-26 of FIG. 6.
FIG. 27 is a detailed view of a portion of the cross section of FIG. 26.
FIG. 28 is a detailed view of a portion of the cross section of FIG. 26 according to another embodiment of the present disclosure.

### DETAILED DESCRIPTION

Before any embodiments, examples, aspects, or features are explained in detail, it is to be understood that those embodiments, examples, aspects and features are not limited in their application to the details of construction and the arrangement of components set forth in the following description or illustrated in the following drawings.

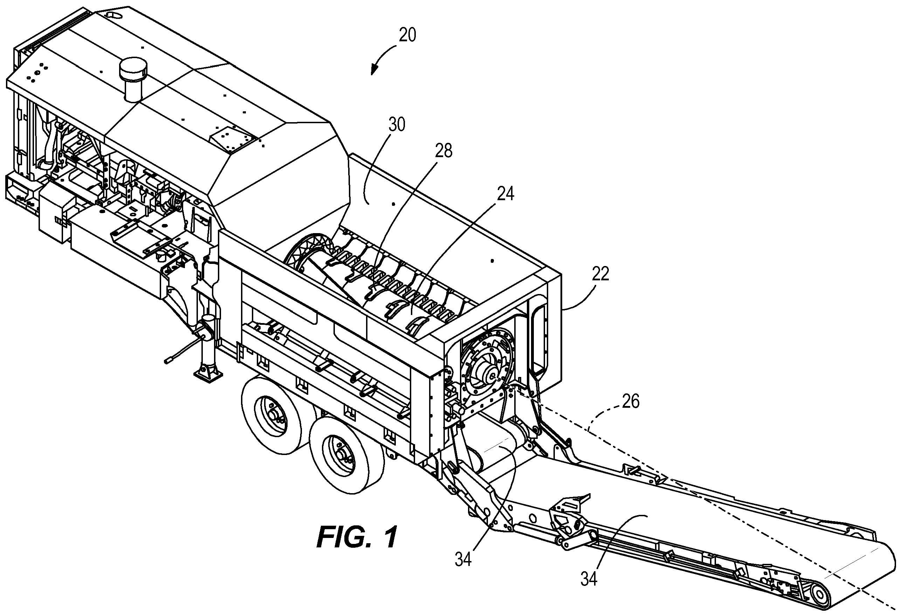

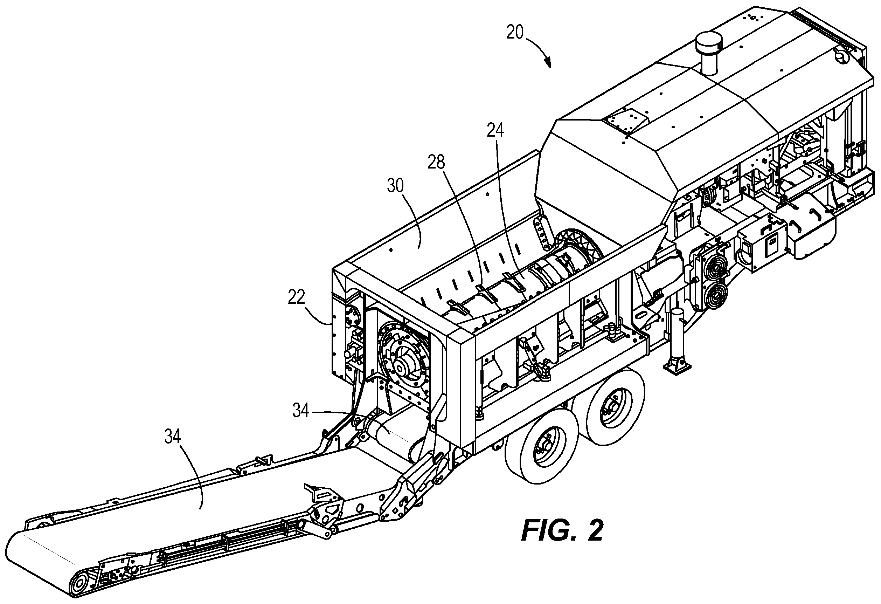

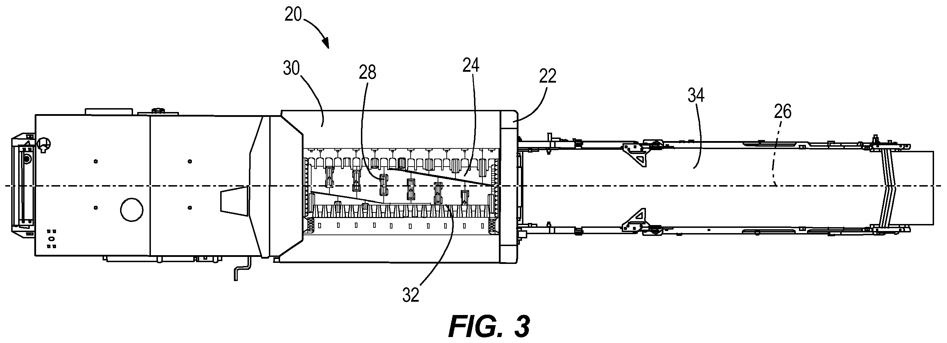

FIGS. 1-3 depict a material reducing machine 20 that is one example of a type of material reducing machine in which a reducing rotor in accordance with the principles of the present disclosure can be incorporated. The rotary material reducing machine 20 is depicted as a shredder, but it will be appreciated that aspects of the present disclosure are also applicable to other types of material reducing machines such as grinders and chippers. In one optional example, the rotary material reducing machine 20 can be a relatively slow-speed shredder at which the rotor (described below in detail) is operated at speeds less than or equal to 40 rotations per minute during shredding operations. It will be appreciated that slower operating rotor speeds decrease the importance of maintaining rotor balance and therefore allow for more flexibility in selecting different reducing rotor components and configurations. It another optional example, the rotary material reducing machine 20 can be a relatively fast-speed grinder or chipper at which the rotor is operated at speeds more than 40 rotations per minute during shredding operations.

The rotary material reducing machine 20 includes a main framework defining a reducing box 22 in which a reducing rotor 24 is positioned. The reducing rotor 24 is mounted to rotate within the reducing box 22 about a central axis 26. The reducing rotor 24 may be rotationally mounted to the reducing box 22 via bearings. A plurality of reducers 28 are mounted at an exterior of the reducing rotor 24. When the reducing rotor 24 is rotated about the central axis 26, the reducers 28 are carried by the reducing rotor 24 along circular reducing paths that surround the central axis 26. The rotary material reducing machine 20 includes a hopper 30 above the reducing rotor 24 for allowing the to-be-reduced material to be fed into the reducing box 22. The hopper 30 optionally includes a screen (not shown) that mounts below the reducing rotor 24 for controlling the size of the reduced product which is output from the reducing box 22. The rotary material reducing machine 20 may further include a shredding comb 32 mounted within the reducing box 22. The shredding comb 32 includes a plurality of comb teeth, and the shredding comb 32 is positioned relative to the reducing rotor 24 such that the reducers 28 of the reducing rotor 24 intermesh with the comb teeth of the shredding comb 32 as the reducing rotor 24 is rotated about the central axis 26. In other words, as the reducing rotor 24 rotates, the reducers 28 pass between corresponding comb teeth of the shredding comb 32. The rotary material reducing machine 20 also includes a powertrain (not shown) for driving the rotation of the reducing rotor 24 about the central axis 26. The powertrain can include a prime mover (e.g., an engine) that provides the power required to drive rotation of the reducing rotor 24. The powertrain can also include a transmission for transferring the power from the prime mover to the reducing rotor 24. The power can be transferred in the form of torque. The rotary material reducing machine 20 may also include one or more conveyors 34 for transferring the reduced product discharged from the reducing box 22 away from the reducing box 22.

In the operation of the rotary material reducing machine 20, material desired to be reduced is fed into the reducing box 22 through the hopper 30. Within the reducing box 22, the reducing rotor 24 is rotated about the central axis 26 by the powertrain. The material fed into the reducing box 22 is impacted by the reducers 28 of the reducing rotor 24, and the material is forced by the reducers 28 through the shredding comb 32 thereby causing the material to be reduced in size via shredding. The shredded material forced through the shredding comb 32 can be deposited on the conveyor 34 and transferred by the conveyor 34 to a collection location such as a truck bed or a pile on the ground. If the hopper 30 includes a sizing screen below the reducing rotor 24, material that has been reduced to a size small enough to pass through the screen is deposited on the conveyor 34 while the remainder of the material is recirculated by the reducing rotor 24 back into the reducing box 22 for further processing until it is small enough to pass through the screen.

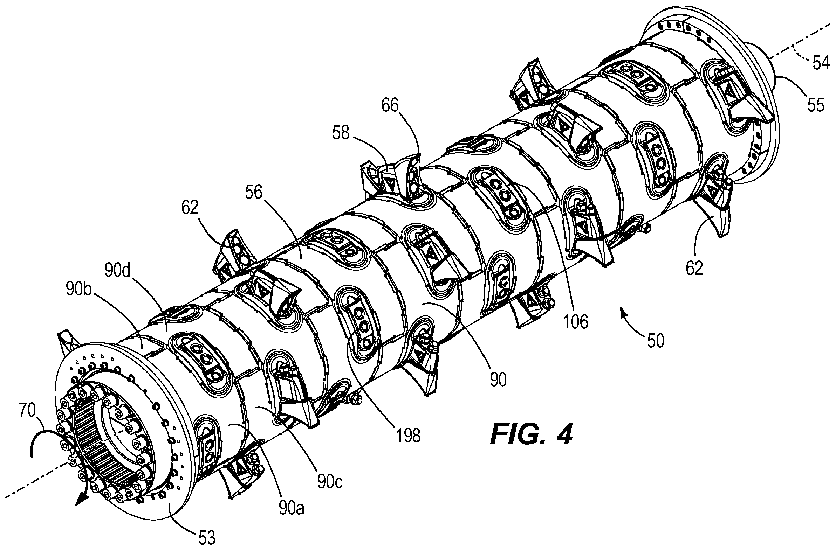

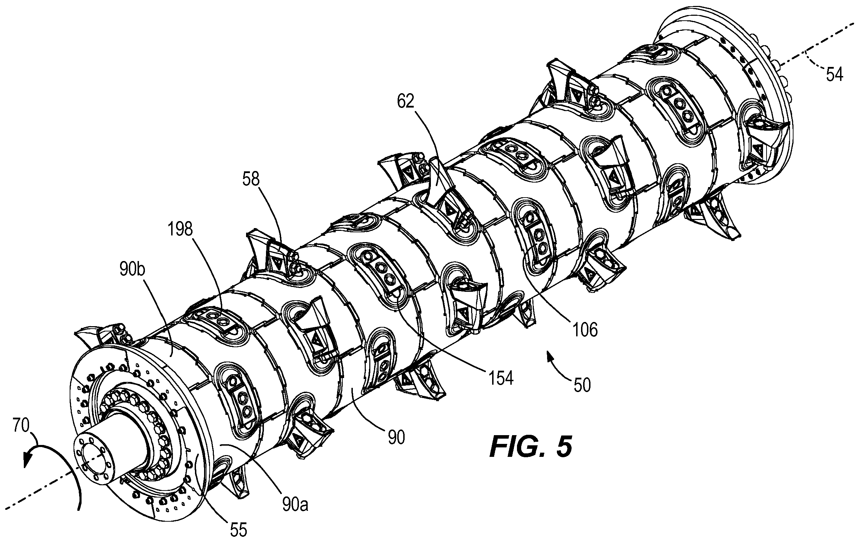

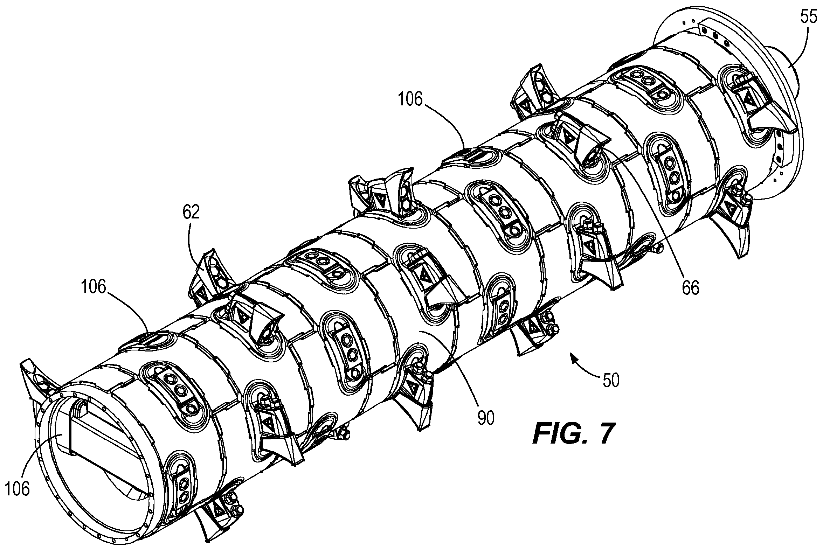

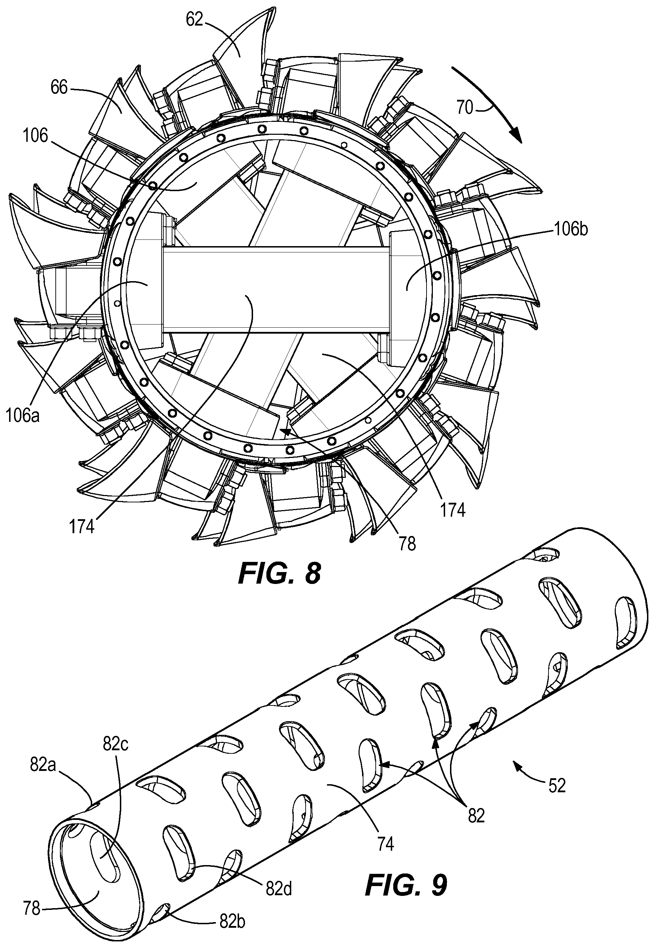

FIGS. 4-8 illustrate a reducing rotor system 50 having a drum 52 (e.g., a reducing rotor shown separately in FIG. 9) that can be integrated into a material reducing machine such as the rotary material reducing machine 20. Thus, the reducing rotor system 50 is configured as a rotary material reduction tool. The reducing rotor system 50 is rotatable about a central rotational axis 54. The reducing rotor system 50 is mountable in a material reducing machine (e.g., in the reducing box 22 of the rotary material reducing machine 20), and when mounted in the rotary material reducing machine 20, the rotational axis 54 of the reducing rotor system 50 is coincident with the central axis 26 of the rotary material reducing machine 20. Rotational axis 54 of the reducing rotor system 50 also extends through a center of the drum 52 to form a rotation axis thereof.

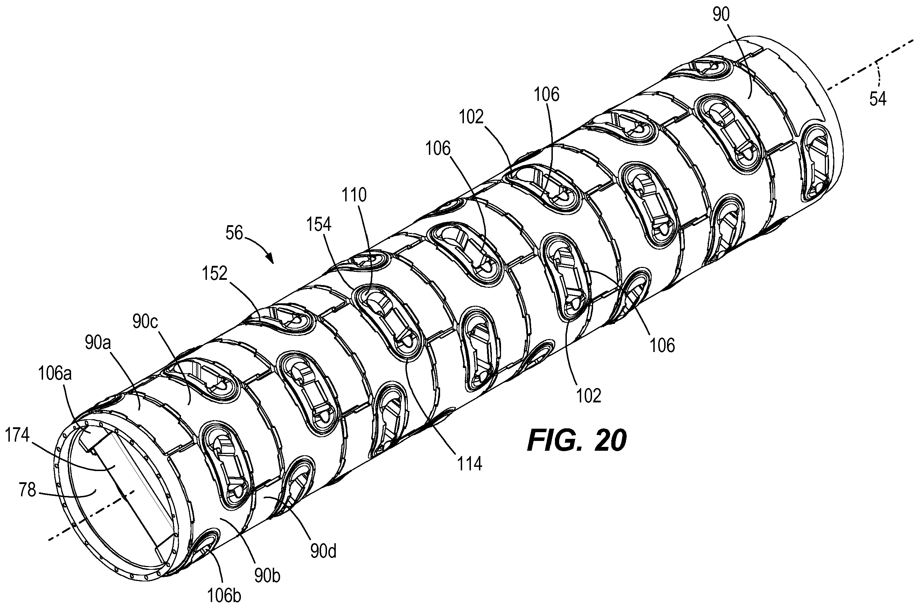

The reducing rotor system 50 includes the drum 52 (FIG. 9) which is part of a rotor weldment 56 (FIG. 20), hammers 58 that are removably coupled to the rotor weldment 56, and reducers 62 (e.g., teeth, cutters, blades, etc.) that are removably coupled to the hammers 58. The reducing rotor system 50 includes a first end cap 53 and a second end cap 55 opposite the first end cap 53, portions of which may be removably coupled to the ends of the rotor weldment 56. In use, the reducing rotor system 50 can be rotationally driven by a source of torque (e.g., a powertrain) to rotate about the rotational axis 54. The first end cap 53 of the reducing rotor system 50 is the driven end such that the first end cap 53 is connected to the torque source (e.g., the power train) and receives torque from the source. The second end cap 55 of the reducing rotor system 50 is a mounting end that is configured to support the reducing rotor system 50 in the material reducing machine (e.g., in the reducing box 22).

The reducing rotor system 50 is rotated about the rotational axis 54 in the rotation direction 70. In the illustrated embodiment, when the reducing rotor system 50 is viewed from the first end cap 53 (e.g., shown in FIG. 4), the rotation direction 70 is clockwise. The hammers 58 are axially positioned along the reducing rotor system 50 between the first end cap 53 and the second end cap 55. More specifically, each of the hammers 58 is located at a prescribed axial position along the length of the drum 52. When the reducing rotor system 50 rotates about the rotational axis 54, the reducers 62 travel along circular reducing paths that surround the rotational axis 54. In some embodiments, the reducers 62 may be integrally formed with the hammers 58.

FIG. 9 illustrates the drum 52. The drum 52 is an elongated cylindrical structure having an outer surface 74 and an inner cavity 78. The outer surface 74 extends from a first end of the drum 52 to a second end of the drum 52. The first end of the drum 52 is adjacent the first end cap 53, and the second end of the drum 52 is adjacent the second end cap 55. The outer surface 74 also extends about the rotational axis 54.

The drum 52 further includes a plurality of openings 82 (e.g., collar locations) that are configured to receive the hammers 58 and additional supporting structures (described below in detail). The openings 82 extend from the outer surface 74 to the inner cavity 78. In the illustrated embodiment, the openings 82 have an oval shape, however in other embodiments, the openings 82 may have a different elongated shape (e.g., rectangular).

The openings 82 include a first opening 82a, a second opening 82b, a third opening 82c, and a fourth opening 82d defined in the outer surface 74 of the drum 52. The openings 82 are grouped in axial sets that are spaced apart along the length of the drum 52. A first set of openings includes the first opening 82a and the second opening 82b. The first and second openings 82a, 82b are positioned at the same axial position along the drum 52. The first and second openings 82a, 82b are positioned radially opposite of each other such that the first and second openings 82a, 82b are spaced 180 degrees apart. Said another way, the first and second openings 82a, 82b are diametrically opposed on the drum 52. In the illustrated embodiment, each of the axial set of openings includes two openings 82 (e.g., the first opening 82a and the second opening 82b), however, in other embodiments, the set of openings may include more openings 82 that are equally spaced along the circumference of the drum 52. In some embodiments, the set of openings may only include one opening.

The third opening 82c and the fourth opening 82d form a second set of openings that are similar to the first set of openings (e.g., first and second openings 82a, 82b) and axially spaced from the first set of openings. In the illustrated embodiment, the second set of openings are also angularly offset from the first set of openings. In the illustrated embodiment, the sets of openings are offset by 60 degrees, however, in some embodiments, the angular offset amount may be more or less.

With reference to FIGS. 4-8 and 20-22, the hammers 58 are removably coupled to the drum 52 by a collar (e.g., a mount or a support). The reducing rotor system 50 may include a plurality of collars 106 that removably couple the hammers 58 to the drum 52 and provide support to the hammers 58. Each of the collars of the plurality of collars 106 is at least partially received in one of the openings 82.

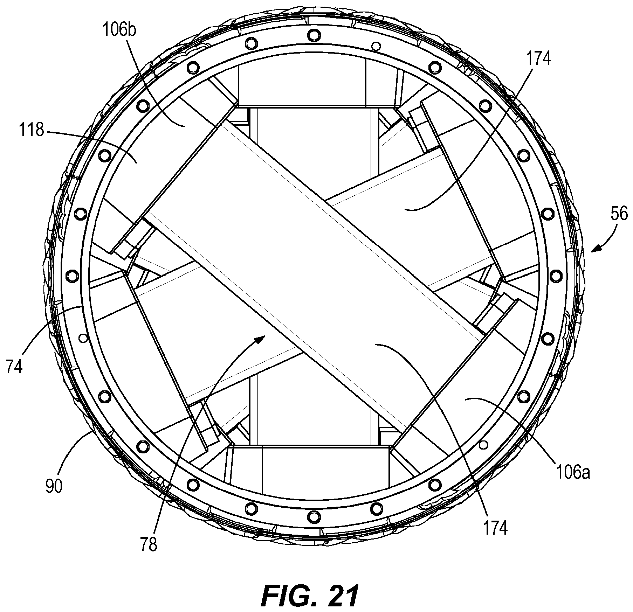

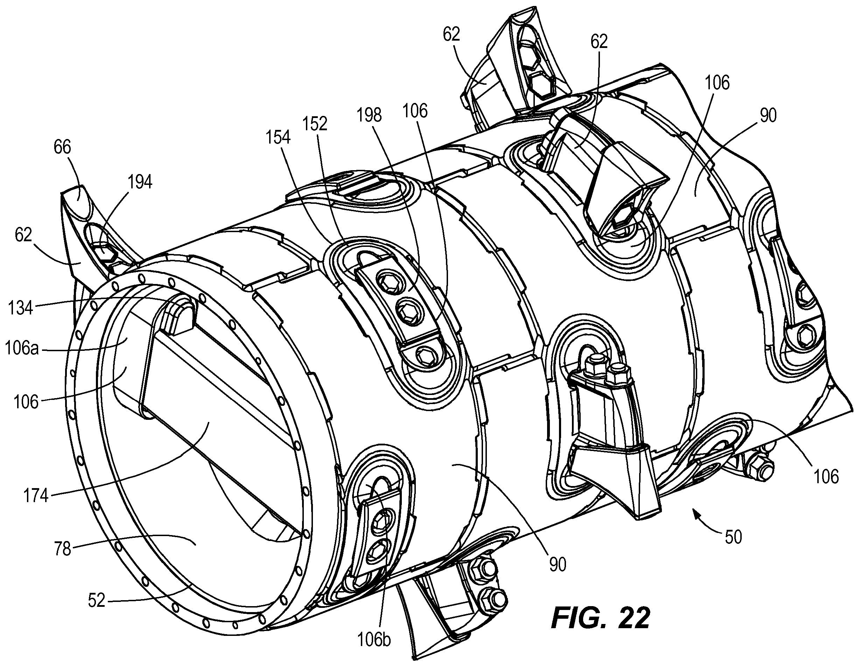

The plurality of collars 106 includes a first collar 106a and a second collar 106b (FIGS. 21, 22). The first collar 106a is at least partially received in the first opening 82a and the second collar 106b is at least partially received in the second opening 82b. In the illustrated embodiment, the first collar 106a is coupled to and supports one end of a hammer, while the second collar 106b is coupled to and supports the other end of the hammer. In the illustrated embodiment, the second collar 106b is similar to the first collar 106a such that only the first collar 106a will be described in detail. In some embodiments, the second collar 106b may be different than the first collar 106a.

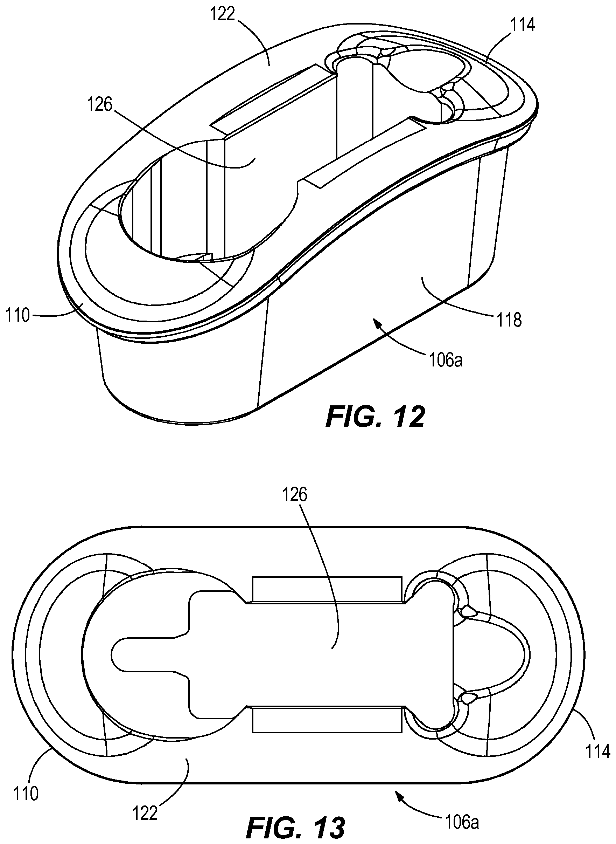

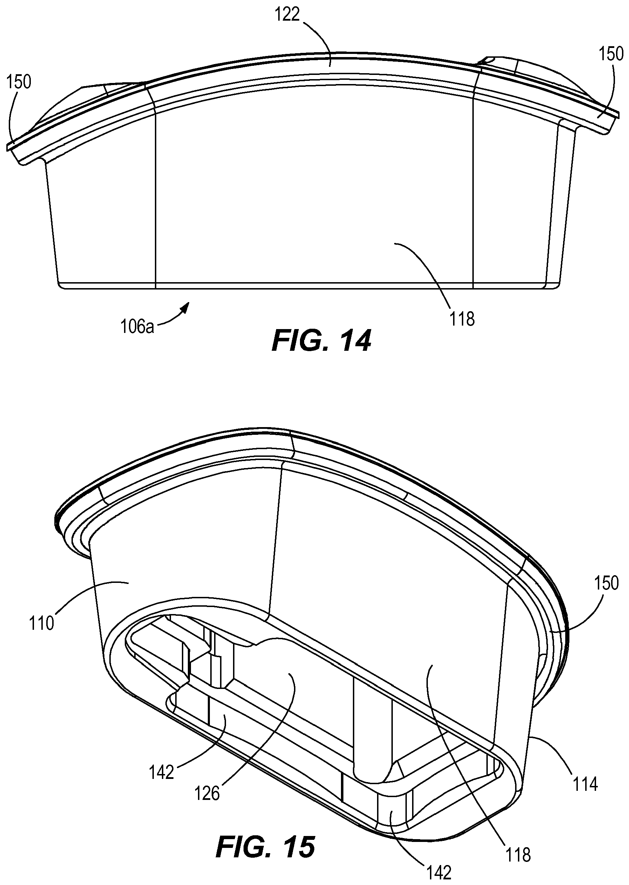

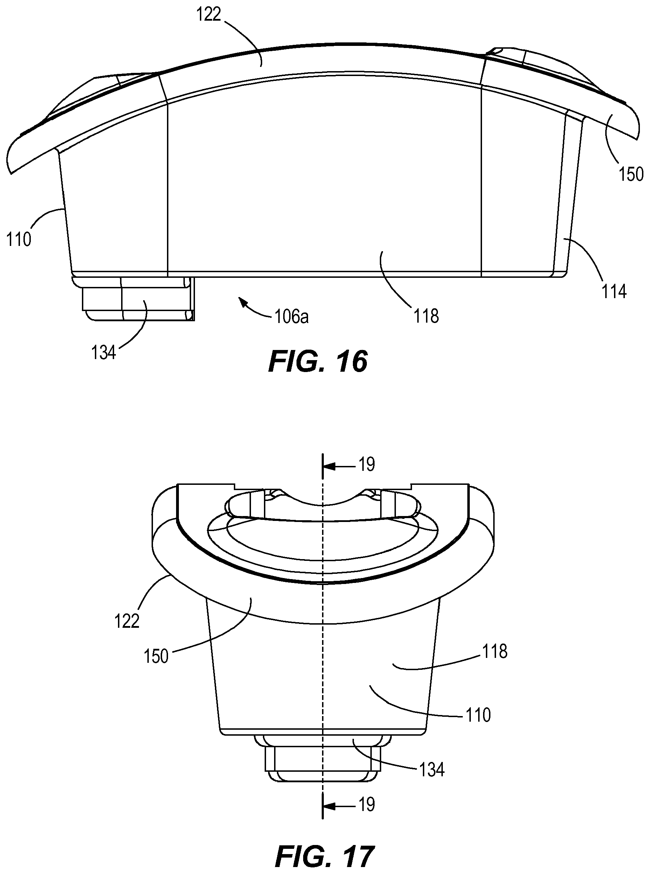

With reference to FIGS. 12-19, the first collar 106a may be a monolithic body. The first collar 106a may be a forged body. The first collar 106a has an inner portion 118 (e.g., a first portion), an outer portion 122 (e.g., a second portion), and a hammer cavity 126 that extends between the inner portion 118 and the outer portion 122. When the first collar 106a is received in (e.g., positioned in or coupled to) the opening 82a, the inner portion 118 extends into the drum 52 and the outer portion 122 extends along the outer surface 74 of the drum 52. In the illustrated embodiment, the inner portion 118 is smaller than the opening 82a such that there is a clearance gap between the inner portion 118 and the opening 82a when the first collar 106a is situated in the opening 82a. In some embodiments, the inner portion 118 is the same size as the opening 82a such that the inner portion 118 is flush against the opening 82a when the first collar 106a is situated in the opening 82a.

The outer portion 122 includes a flange 150 (e.g., an overhang). The flange 150 is the widest part of the first collar 106a such that the flange 150 defines an outer periphery of the first collar 106a. The outer periphery is larger than the periphery of the opening 82a. In the illustrated embodiment, the flange 150 continuously extends along the entire periphery of the first collar 106a. In some embodiments, the flange 150 may only extend along a section of the first collar 106a. For example, the flange 150 may only extend along the ends of the first collar 106a, or the flange 150 may be formed from intermittent sections that span along the periphery of the collar 106a.

The flange 150, and the outer periphery of the first collar 106a form a curved surface. The curved surface has a similar (e.g., matching) curvature as the outer surface 74 of the drum 52 such that the flange 150 extends beyond the opening 82 when the first collar 106a is received in the opening 82a. The flange 150 extends along the outer surface 74 of drum 52. In the illustrated embodiment, there is a clearance gap between the flange 150 and the outer surface 74 of the drum 52. In some embodiments, the flange 150 is flush against the outer surface 74 of the drum 52.

In some embodiments (not shown), the flange 150 includes a set of contact points (e.g., bosses, knobs, or nubs) such that when the first collar 106a is inserted in the opening 82a, the flange 150 only contacts the outer surface 74 of the drum 52 at the contact points. The flange 150 may include three or more contact points that are spaced along the flange 150. The contact points may be integrally formed with the first collar 106a.

The hammer cavity 126 is configured to at least partially receive one of the hammers 58. The hammer cavity 126 has a generally rectangular cross-section (as viewed in FIG. 13). In the illustrated embodiment, the hammer cavity 126 has rounded edges. The hammer cavity 126 is dimensioned to fit one of the hammers 58. The hammer cavity 126 may be sized only slightly larger than one of the hammers 58. The hammer cavity 126 may be centered on the first collar 106a such that the center of the hammer cavity 126 is aligned with the center of the first collar 106a. The hammer cavity 126 maybe formed during the forging process of the first collar 106a, or the hammer cavity 126 may be formed by machining (e.g., cut or bored) after the first collar 106a is forged. In some embodiments, the hammer cavity 126 may be off centered on the first collar 106a.

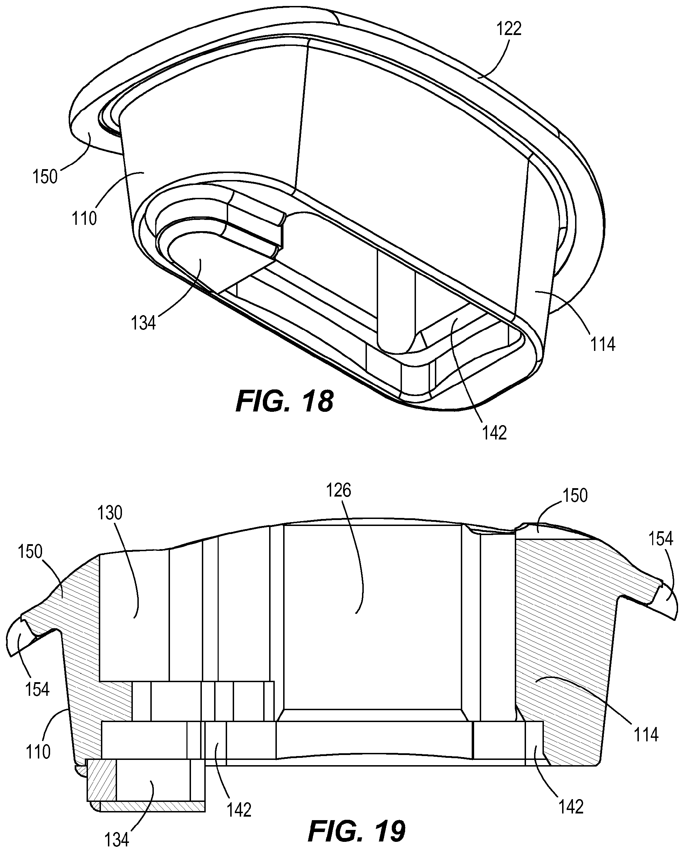

The hammer cavity 126 may include an inner profile 142 (FIG. 19) disposed along the periphery of the hammer cavity 126. The inner profile 142 is configured to receive a sleeve (discussed below in detail). The inner profile 142 is positioned on a distal end of the inner portion 118 (e.g., the end of the first collar 106a opposite of the flange 150). The inner profile 142 extends partially from the distal end of the first collar 106a toward the flange 150. The inner profile 142 may only extend one fifth of the length of the inner portion 118. In some embodiments, the inner profile 142 may only extend one third of the length of the inner portion 118. In some embodiments, the inner profile 142 may extend the length of the inner portion 118. In some embodiments, the inner profile 142 may extend the entire length of the first collar 106a.

The first collar 106a may further includes a wedging side 110 (e.g., a first side) and a support side 114 (e.g., a second side). The hammer cavity 126 is in between the wedging side 110 and the support side 114. In the illustrated embodiment, when the first collar 106a is positioned in the opening 82a, the wedging side 110 is forward with respect to the rotation direction 70 and the support side 114 is rearward with respect to the rotation direction 70. In some embodiments, the support side 114 may be forward with respect to the rotation direction 70. In some embodiments, the first collar 106a may include two wedging sides 110 (e.g., a front wedging side and a rear wedging side) and no support side. In some embodiments, the first collar 106a may include two support sides 114 (e.g., a front support side and a rear support side) and no wedging side.

The wedging side 110 includes a wedging cavity 130 that extends into the length of the first collar 106a. The wedging cavity 130 and the hammer cavity 126 may be open to each other either directly or indirectly. The wedging cavity 130 and the hammer cavity 126 may be directly adjacent and directly open to each other. In the illustrated embodiment, the wedging cavity 130 is continuous (e.g., fluidly connected) with the hammer cavity 126. The wedging cavity 130 may be formed during the forging process of the first collar 106a, or the wedging cavity 130 may be formed by machining (e.g., cut, or bored) after the first collar 106a is forged. In some embodiments, the wedging cavity 130 may only partially extend the length of the first collar 106a.

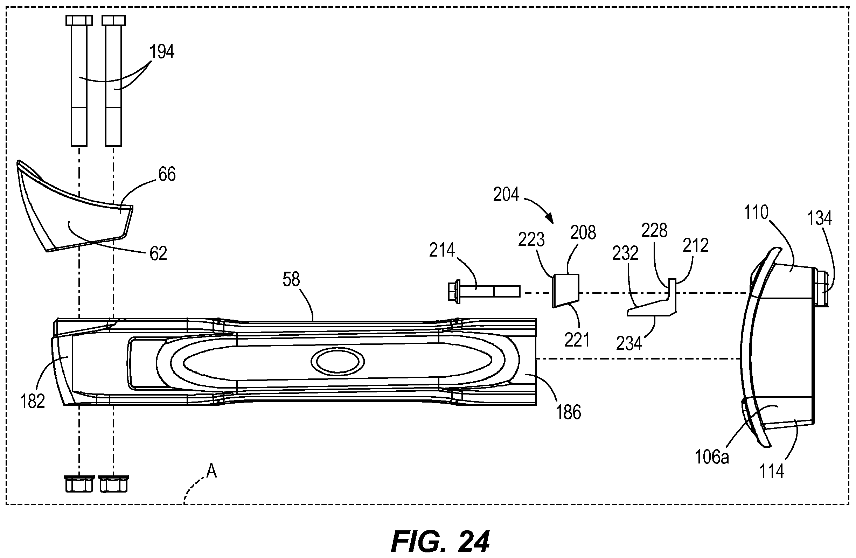

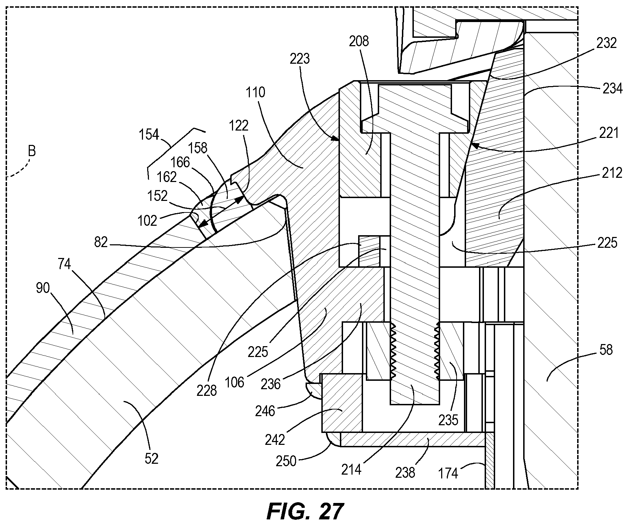

With reference to FIGS. 24 and 27, a wedging assembly 204 is disposed in the wedging cavity 130. The wedging assembly 204 removably secures the hammer 58 to the first collar 106a. The operation of the wedging assembly 204 applies a force onto the hammer 58 that is perpendicular to the length of the hammer 58 in order to pinch or wedge the hammer 58 to the first collar 106a. The wedging assembly 204 may include a first wedge 208, a second wedge 212, and a fastener 214 (e.g., a bolt). The fastener 214 extends through the first wedge 208 and through the second wedge 212.The fastener 214 does not extend through the hammer 58 or the reducer 62.

The first wedge 208 includes a recess 218, an angled contact face 221, and a wedge surface 223. The recess is configured to receive a portion of the fastener 214. The wedge surface 223 is opposite the angled contact face 221. The wedge surface 223 is adjacent the collar 106.

The second wedge 212 has an L-shape. The second wedge 212 includes a base 228, an angled contact face 232, and a wedge surface 234. The base 228 includes a recess 225 that receives a portion of the fastener 214. The base 228 is positioned below the first wedge 208. The angled contact face 232 is positioned between the angled contact face 221 of the first wedge 208 and the hammer 58. The angled contact face 232 of the second wedge 212 is configured to engage with the angled contact face 232 of the first wedge 208. The wedge surface 234 is opposite the angled contact face 232. The wedge surface 234 is adjacent the hammer 58 and applies a force to the hammer 58. The force is perpendicular to the length of the hammer 58.

The fastener 214 is received in both the first wedge 208 and the second wedge 212 and is threadingly received by a nut 235. In some constructions, the nut 235 is T-shaped. The nut 235 is positioned below both the first wedge 208 and the second wedge 212. The wedging cavity 130 may have a projection 236 that separates the wedges 208, 212 from the nut 235 and limits the axial movement of the nut 235. In other embodiments, the nut 235 may be a hex-nut or a square nut.

As the fastener 214 is tightened into the nut 235, it causes the first wedge 208 to engage with the second wedge 212. More specifically, tightening the fastener 214 pushes the first wedge 208 downward (e.g., toward the inner cavity 78) and causes the angled contact face 232 of the first wedge 208 to engage with the angled contact face 232 of the second wedge 212. The first wedge 208 pushes the wedge surface 234 of the second wedge 212 laterally against the hammer 58 such that the hammer is secured (e.g., wedged, or pinched) into the first collar 106a and cannot be removed. When the fastener 214 is loosened, it allows the first wedge 208 to disengage with the second wedge 212. The first wedge 208 is relaxed such that the first wedge 208 may exert less of a force onto the second wedge 212. The hammer 58 is no longer secured such that it can be removed from the first collar 106a.

The wedging side 110 may also include an extension 134. The extension 134 extends past the support side 114. The extension 134 includes a cap 238 and a spacer 242 that extend the length of the wedging cavity 130. The cap 238 is configured to cover the wedging cavity 130 and prevents the nut 235 from falling into the inner cavity 78 of the drum 52. The spacer 242 allows the fastener 214 and the nut 235 to be positioned in the wedging cavity 130 and allows extra room for the fastener 214 to move downward.

The spacer 242 is welded to the distal end of the wedging side 110 by a weld 246. The cap 238 is welded to the spacer 242 by a weld 250. In some embodiments, the spacer 242 and the cap 238 are a unitary piece. In some embodiments, the spacer 242 and the cap 238 are included in the monolithic forging of the first collar 106a.

The support side 114 provides strength to the first collar 106a. The support side 114 is an entirely solid structure and does not have any openings. The support side 114 does not have any removable pieces or elements.

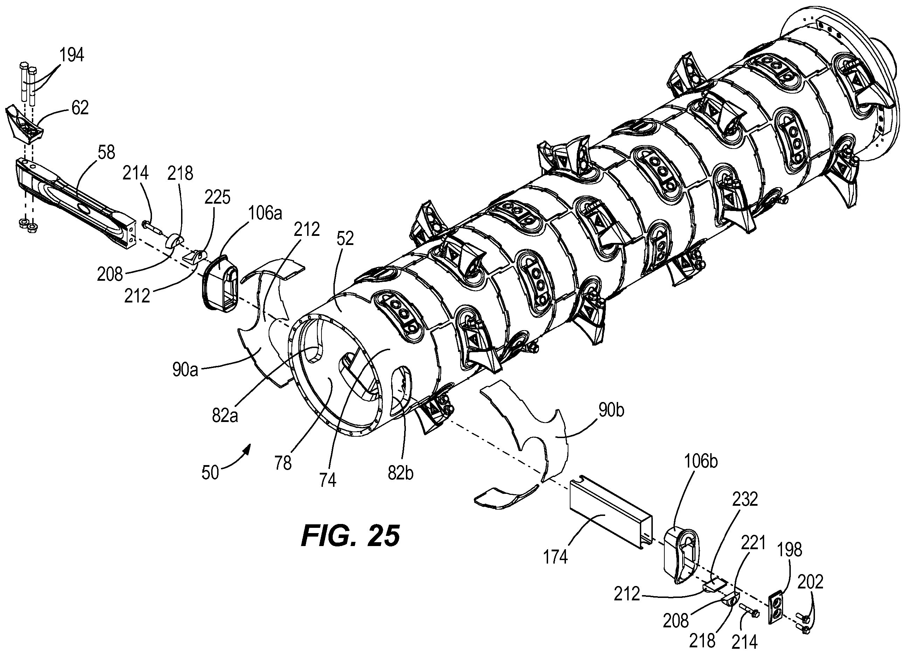

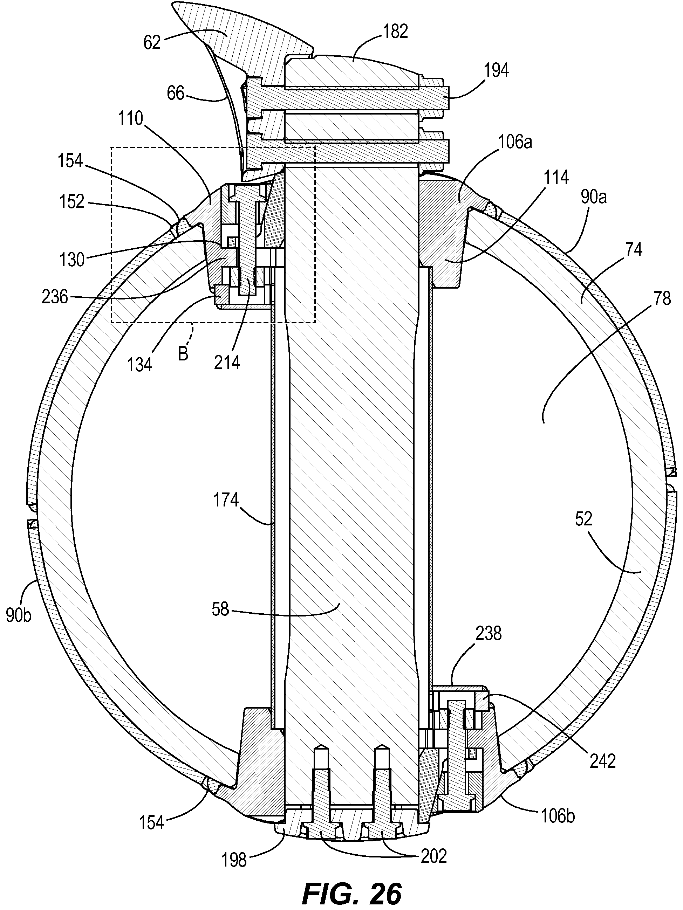

With reference to FIGS. 20-27, the reducing rotor system 50 may include a sleeve 174 that is coupled to the first collar 106a and the second collar 106b. More specifically, the sleeve 174 may be press fit into the inner profile 142 of the first collar 106a and the second collar 106b. The sleeve 174 is a rectangular extension that is configured to receive a hammer. The sleeve 174 has a constant rectangular cross section. The sleeve 174 extends through the inner cavity 78 of the drum and at least partially between the first opening 82a and the second opening 82b. More specifically, the sleeve 174 extends between the first collar 106a and the second collar 106b. The sleeve 174 prevents objects (e.g., hammers, dirt, chipped material, etc.) from accidently falling into the inner cavity 78 of the drum 52 which may be inaccessible once assembled in a material reducing machine.

Additionally, the sleeve 174 may be used during assembly of rotor weldment 56 to create the clearance gap between the collars 106a, 106b and the outer surface 74 of the drum 58. More specifically, the length of the sleeve 174 can be selected to create the gap and control the size of the gap between the collars 106a, 106b and the outer surface 74. A first end of sleeve 174 is received in the inner profile 142 of the first collar 106a and a second end of the sleeve 174 is received in the inner profile 142 of the second collar 106b. The length of the sleeve 174 separates the first collar 106a and the second collar 106b apart from each other. To set an increased distance between the first collar 106a and the second collar 106b, the sleeve 174 may be increased in length. To set a decreased distance between the first collar 106a and the second collar 106b, the sleeve 174 may be decreased in length. The length of the sleeve 174 is selected to achieve the desired gap between the first collar 106a and the outer surface 72 and the desired gap between the second collar 106b and the outer surface 72. The desired gaps allow for a more controlled and consistent weld (discussed below in detail).

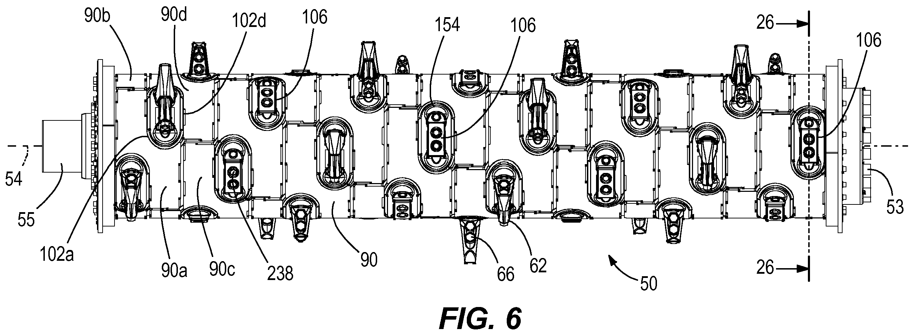

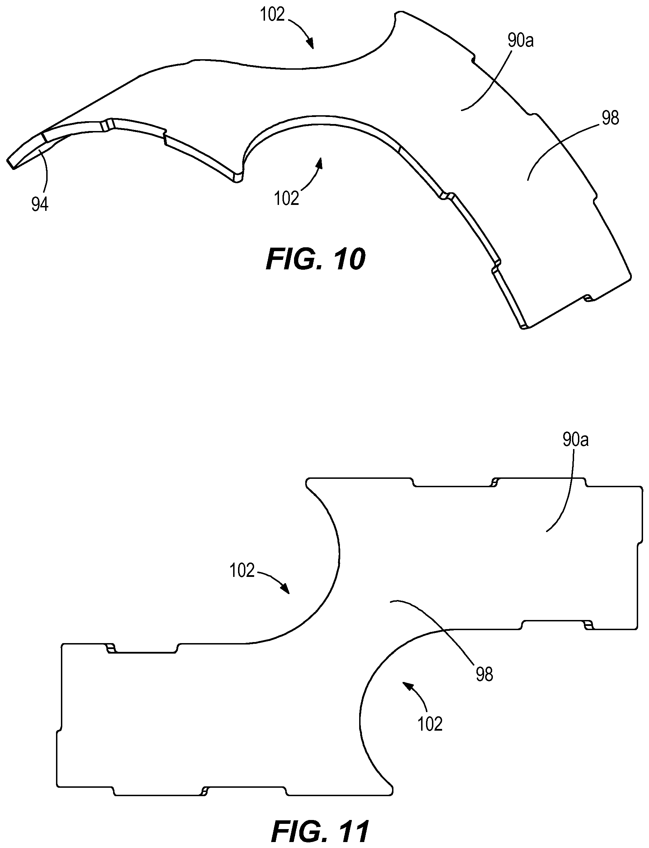

With reference to FIGS. 6, 10, 11, and 20, the rotor weldment 56 may include a plurality of wear plates 90 (e.g., a plating or a shell) that extend along the outer surface 74 of the drum 52. The plurality of wear plates 90 is fixed to the outer surface 74 of the drum 52. More specifically, the plurality of wear plates 90 is welded to the outer surface 74 of the drum 52. The plurality of wear plates 90 may be formed from a material that is harder than the outer surface 74. The material of the wear plates 90 may be Hardox^{®} 500 abrasion resistant steel. Alternatively, the wear plates 90 may be construed of another suitable abrasion resistant steel. The plurality of wear plates 90 increases the strength and wear resistance of the rotor weldment 56 as compared to the drum 52 alone.

In the illustrated embodiment, the plurality of wear plates 90 includes a first wear plate 90a, a second wear plate 90b, a third wear plate 90c, and a fourth wear plate 90d. The first wear plate 90a is circumferentially adjacent the second wear plate 90c, and the third wear plate 90c is circumferentially adjacent the fourth wear plate 90d. The first wear plate 90a is axially adjacent to the third wear plate 90c, and the second wear plate 90d is axially adjacent to the fourth wear plate 90d. In the illustrated embodiment, the wear plates 90a-90d are all similar, such that only the first wear plate 90a will be described in detail.

The first wear plate 90a includes an inner surface 94, an outer surface 98, and at least one curved edge 102. When the first wear plate 90a is positioned on the drum 52, the inner surface 94 of the first wear plate 90a abuts the outer surface 74 of the drum 52 and is flush against the outer surface 74. The first wear plate 90a defines a curved inner surface 94. In the illustrated embodiment, the inner surface 94 has a semi-circular shape. The second wear plate 90b is positioned circumferentially adjacent to the first wear plate 90a to cover the circumference of the drum 52. The circumferentially adjacent wear plates (e.g., the first wear plate 90a and the second wear plate 90b) may abut each other, or there may be a gap defined between the wear plates 90a, 90b. In other embodiments, the wear plates may be smaller such that it may take three or more wear plates to cover the circumference of the drum 52. Similar to the openings 82, the first and second wear plates 90a, 90b are angularly offset from the third and fourth wear plates 90c, 90d, as shown in FIG. 20. In the illustrated embodiment, the sets of wear plates are offset by 60 degrees. In some embodiments, the angular offset amount may be more or less.

The first wear plate 90a has two curved edges 102. When the first wear plate 90a is positioned on the drum 52, the curved edges 102 are positioned adjacent a corresponding portion of the openings 82 of the drum 52. Said another way, the edges 102 follow a contour of part of the openings 82. In the illustrated embodiment, the edges 102 have a semi-oval shape such that two wear plates form an oval opening that follows the contour of one of the openings 82 or follows the contour of one of the collars 106. For example, with reference to FIG. 6, an oval opening is formed between the first wear plate 90a having an edge 102a and the fourth wear plate 90d having an edge 102d. In some embodiments, the first wear plate 90a has an opening that is oval shaped such that only one wear plate (e.g., the first wear plate 90a) is needed to create the opening that corresponds with the opening 82. In some embodiments, the wear plates 90 may have welding tabs that extend from the wear plate 90 and allow for welding on the tabs.

The wear plates 90 may be positioned adjacent the collars 106 while allowing for a clearance for welding between the wear plates 90 and the collars 106. For example, in the illustrated embodiment, the first wear plate 90a is positioned adjacent the first collar 106a. More specifically, the edges 102 of the first wear plate 90a are adjacent the outer portion 122 of the first collar 106a. The edges 102 may be offset from the outer portion 122 such that a weld gap 152 (FIG. 27) is defined between the edge 102 and the outer portion 122. At the weld gap 152, the outer surface 74 of the drum 52 is exposed. The weld gap 152 may extend along the entire periphery of the outer portion 122, or the weld gap 152 may only partially extend along the periphery of the outer portion 122. In some embodiments, the first wear plate 90a is immediately adjacent the first collar 106a and there is no weld gap defined between to the first wear plate 90a and the first collar 106a.

With reference to FIG. 27, at the weld gap 152 the first wear plate 90a, the first collar 106a, and the outer surface 74 of the drum 52 may be welded together to from the rotor weldment 56. The welding may be accomplished with at least one weld to span the weld gap 152. In the illustrated embodiment, the weld gap 152 is filled with a plurality of welds 154. The plurality of welds 154 may include a first weld bead 158, a second weld bead 162, and a third weld bead 166. The first weld bead 158 is applied between the outer portion 122 of the first collar 106a and the outer surface 74 to fix the first collar 106a to the outer surface 74. The second weld bead 162 is applied between the first wear plate 90a and the outer surface 74 to fix the first wear plate 90 to the outer surface 74. The third weld bead 166 is applied between the first weld bead 158 and the second weld bead 162 to secure the first collar 106a, the first wear plate 90a, and the outer surface 74 together. The first weld bead 158 and the second weld bead 162 may each be formed from multiple weld passes (e.g., weld layers). For example, the first weld bead 158 and the second weld bead 162 may each be formed from three weld passes. The weld passes may be continuous welds that extend along the entire outer periphery of the first collar 106a and the edges 102 of the first wear plate 90a. In some embodiments, the weld passes may be non-continuous passes that extend along the outer periphery of the first collar 106a and the edges 102 of the first wear plate 90a. In some embodiments, the weld beads 158, 162, 166 may be applied in a different order. In some embodiments, the plurality of welds 154 may include more welds. In some embodiments, the wear plates 90 may be directly welded to the collars 106 with minimal or no welds connecting the wear plates 90 to the outer surface 74 of the drum 52.

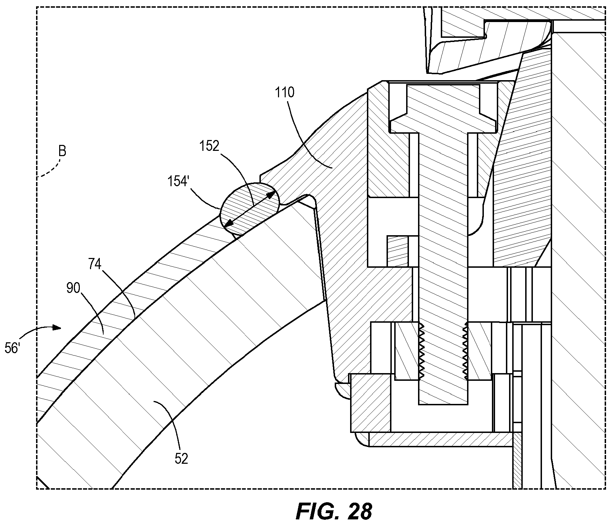

FIG. 28 illustrates a rotor weldment 56' according to another embodiment. The rotor weldment 56' is similar to the rotor weldment 56, however the rotor weldment 56' includes a different weld pattern. The flange of the first collar 106a, the outer surface 74 of the drum 52, and the wear plate 90 of the rotor weldment 56' are secured or fused together by a single weld 154'. The single weld 154' is a single weld bead, formed in a single weld pass, that fills the entire weld gap 152. The single weld 154' may be achieved by applying a single weld bead on the outer surface 74 of the drum 52, the flange of the first collar 106a, and the wear plate 90 with submerged arc welding.

FIGS. 27 and 28 illustrate the welds 154, 154' as extending along the surfaces of the drum 52, 52', the first collar 106, 106', and the wear plate 90, 90'. However, one skilled in the art of welding would recognize that the welds 154, 154' penetrate into and fuse with the base material of the drum 52, 52', the first collar 106, 106', and the wear plate 90, 90'.

With reference to FIGS. 20 and 21, the drum 52, the collars 106, the wear plates 90, and the welds 154 form the rotor weldment 56. The welds 154 fuse the drum 52, the collars 106, and the wear plates 90 together to form the rotor weldment 56. The rotor weldment 56 is permanently coupled together. The hammers 58 are removably coupled to the rotor weldment 56.

The collars 106 and the welds 154, 154' increase the strength of the drum 52. More specifically, the collars 106 and the welds 154, 154' reduce the amount of stress at the periphery of the openings 82 along the outer surface 74 of the drum 52. The collars 106 prevent the trailing edge of the openings 82 (e.g., the edge adjacent the support side 114 of the collars 106) from over stressing as the reducers 62 repeatedly impact the material. The rotor weldment 56 creates a load path that transfers some or a majority of the load (e.g., the stress) experienced during reduction from the reducers 62 and hammers 58, through the collar 106 (via the flange 150), to the drum 52 and/or wear plates 90. The load path distributes the load to the rotor weldment 56 instead of focusing the load to the periphery of the openings 82.

With reference to FIG. 24, the hammer 58 includes a first end 182 and a second end 186 opposite the first end 182. In the illustrated embodiment, the hammer 58 has a generally rectangular shape. More specifically, the ends 182, 186 may be wider than the center portion of the hammer 58.

During assembly, the hammer 58 is positioned in the sleeve 174, which extends into the inner cavity 78 of the drum 52, and is removably coupled the first collar 106a and second collar 106b. More specifically, the first end 182 of the hammer 58 is received in the first collar 106a, and the hammer 58 extends lengthwise across the rotational axis 54 to the second collar 106b such that the second end 186 of the hammer 58 is received in the second collar 106b. In configurations where the hammer has a reducer on first end 182 and/or second end 186 a portion of the hammer 58 may be exposed (e.g., is outside of the drum 52 and collar 106a, 106b). The exposed portion(s) may have a cutting shape or may serve as a support or mount for a reducer 62. In some embodiments, the hammer 58 has a smaller length and does not extend across the rotational axis 54 such that a first hammer is received in the first collar 106a and a second hammer is received in the second collar 106b.

The first end 182 of the hammer 58 may be a cutting end that is configured to be removably coupled to a reducer 62. The reducer 62 may be removably coupled to the first end 182 by a fastener 194 (e.g., bolt or screw). In the illustrated embodiment, the reducer 62 is coupled to the first end 182 with two fasteners 194. The fasteners 194 are inserted through the reducer 62 and into the hammer 58 in a direction that is perpendicular to the lengthwise direction of the hammer 58. The reducer 62 includes a sharp tool face 66. The tool face 66 is above the wedging side 110 of the first collar 106a such that the tool face 66 is forward facing with respect to the rotation direction 70. The reducer 62 can be replaced or removed from the hammer 58 by loosening the fastener 194. The reducer 62 can be removed without having to remove the hammer 58 from the collar 106 and the rotor weldment 56.

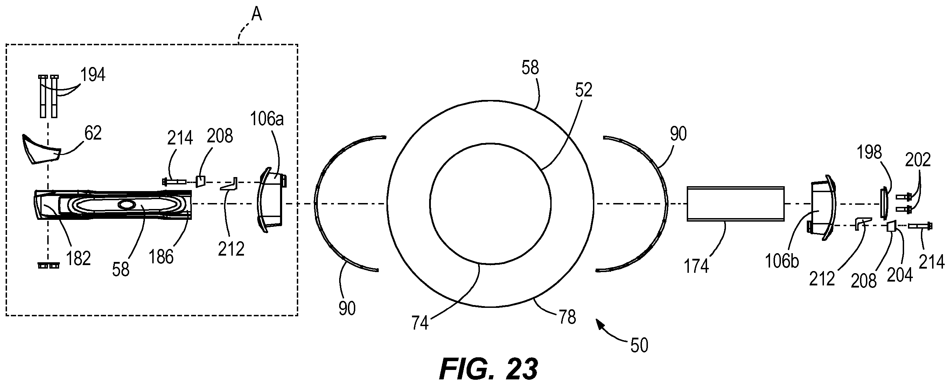

With reference to FIGS. 23, 25, and 26, the second end 186 of the hammer 58 may be a blank end that is not coupled to a reducer 62. The second end 186 is removably coupled to a cap 198 that covers the second end 186. The cap 198 is coupled to the second end 186 by a fastener 202 (e.g., a bolt or screw). In the illustrated embodiment, the cap 198 is coupled to the second end 186 with two fasteners 202. The fasteners 202 are inserted through the cap 198 and into the hammer 58 in a direction that is parallel to the hammer 58.

In some embodiments, the first end 182 and the second end 186 may both be cutting ends. In some embodiments, the first end 182 and the second end 186 may both be blank ends.

Additionally, a detailed description of a hammer that may be similar to the hammer 58 is provided in U.S. Patent No. 11,338,298 of Vermeer Mfg. Co.

The reducing rotor system 50 is assembled by first providing the drum 52. The drum 52 includes at least the first opening 82a and the second opening 82b disposed in the outer surface 74 of the drum 52.

Then, the first collar 106a is inserted (e.g., assembled, situated, or positioned) from an outside of the drum 52 into the first opening 82a until the inner portion 118 extends into the drum 52 and the outer portion 122, more specifically the flange 150 of the outer portion 122, extends beyond the first opening 82a and along the outer surface 74 of the drum 52. The sleeve 174 is inserted through the second opening 82b into the inner profile 142 of the first collar 106a such that the sleeve 174 is press fit into the first collar 106a and extends between the first opening 82a and the second opening 82b. In some embodiments, the sleeve 174 may be press fit to the first collar 106a before the first collar 106a is inserted into the first opening 82a such that the sleeve 174 is inserted into the drum 52 when the first collar 106a is inserted into the drum 52.

Next, the second collar 106b is inserted (e.g., situated) into the second opening 82b until the inner portion 118 extends into the drum 52 and the outer portion 122, more specifically the flange 150 of the outer portion 122, abuts the outer surface 74 of the drum 52. The second collar 106b is aligned with the first collar 106a and the sleeve 174 such that the second collar 106b is coupled to the sleeve 174. More specifically, while the second collar 106b is being inserted in the second opening 82b, the sleeve 174 is aligned with the inner profile 142 of the second collar 106b such that the sleeve 174 may be press fit into the inner profile 142 when the second collar 106b is fully inserted into the opening 82b. The second collar 106b is inserted into the second opening 82b such that the wedging side 110 of the second collar 106b is directionally aligned in reference to the intended direction of rotation 70 with the wedging side 110 of the first collar 106a.

Once the first collar 106a and the second collar 106b are situated in their respective openings 82a, 82b, the wear plates 90a-90d are situated on the outer surface 74 of the drum 52. The wear plates 90a-90d are situated such that the inner surface 94 of the wear plates 90a-90d abut the outer surface 74 of the drum 52 and such that the edges 102 are adjacent the outer portion 122, and more specifically the flange 150 of the outer portion 122, of the collars 106a, 106b. The wear plates 90a-90b are also positioned such that they are offset from the outer portion 122 of the collars 106a, 106b such that a weld gap 152 is formed between the collars 106a, 106b and the wear plates 90a-90d.

Then, the first collar 106a, the second collar 106b, and the wear plates 90a-90d are secured to the outer surface 74 of the drum 52 to form the rotor weldment 56. More specifically, the first collar 106a, the second collar 106b, and the wear plates 90a-90d are welded to the outer surface 74 of the drum 52. Even more specifically, the flange 150 of the first collar 106a, the flange 150 of the second collar 106b, and the outer surface 98 of the wear plates 90a-90d are welded to the outer surface 74 of the drum 52. Welding the first collar 106a, the second collar 106b, and the wear plates 90a-90d may include depositing multiple passes in the weld gap 152. More specifically, the flange 150 of the first collar 106a is welded to the outer surface 74 of the drum 52 by depositing a first weld pass to form the first weld bead 158 at the weld gap 152 between the first collar 106a and the outer surface 74. Then, the outer surface 98 of the wear plate 90a is welded to the outer surface 74 of the drum 52 by depositing a second weld pass to form the second weld bead 162 at the weld gap 152 between the wear plate 90a and the outer surface 74. Finally, the first collar 106a, the wear plate 90a, and the outer surface 74 are welded together by depositing a third weld pass to from the third weld bead 166 between the first weld bead 158 and the second weld bead 162 at the weld gap 152. A similar welding process may be repeated on the other side of the drum 52 to secure the second collar 106b and the second wear plate 90b to the outer surface 74 of the drum 52. As noted above, different weld configurations may be used in forming the rotor weldment 56.

Once the rotor weldment 56 is formed, the hammer 58 is inserted into the drum 52 via the first collar 106a. The hammer 58 is inserted through the first collar 106a and into the sleeve 174. The hammer 58 is inserted until the second end 186 of the hammer 58 is received in the second collar 106b and a portion of the hammer 58 remains exposed.

The hammer 58 is then secured to the first collar 106a and the second collar 106b. The hammer 58 is secured to the first collar 106a by tightening the fastener 214 to push first wedge 208 and the wedge surface 234 of the second wedge 212 against the wedging side 110 of the hammer 58. As the fastener 214 is being tightened, the fastener 214 moves downward (e.g., toward the inner cavity 78) and pushes the first wedge 208 downward. The angled contact face 221 of the first wedge 208 wedges against the angled contact face 232 of the second wedge 212 thereby securing and pinching the hammer 58 to the first collar 106a. A similar wedging process may be repeated on the other side of the drum 52 to secure the hammer 58 to the second collar 106b and the drum 52.

Once the hammer 58 is secured to the first collar 106a and the second collar 106b, the reducer 62 is coupled to the first end 182 and the cap 198 is coupled to the second end 186. The reducer 62 is aligned with the hammer 58 such that the tool face 66 of the reducer 62 faces the rotation direction 70. The reducer 62 is coupled to the hammer 58 by inserting the fastener 194 through the reducer 62 and into the hammer 58 and tightening the fastener 194 to secure the reducer 62. The fastener 194 is inserted in a perpendicular direction relative to the hammer 58. On the second end 186, the cap 198 is coupled to the hammer 58 by inserting the fastener 202 through the cap 198 and into the hammer 58 and tightening the fastener 202 to secure the cap 198. The fastener 202 is inserted in a parallel direction relative to the hammer 58.

Once the reducer 62 and the cap 198 are secured to the hammer 58, the first end cap 53 and the second end cap 55 can be secured to the ends of the rotor weldment 56. Once the end caps 53, 55 are secured to the rotor weldment 56, the reducing rotor system 50 can be placed into a material reducing machine such as the rotary material reducing machine 20 such that the drum rotor weldment 56 and the reducing rotor system 50 can be driven to rotate about the rotational axis 54 and the central axis 26. In some embodiments, the hammers 58, along with the reducers 62 and the caps 198, are secured to the rotor weldment 56 after the rotor weldment 56 is mounted to the material reducing machine.

If one of the reducers 62 breaks or becomes worn down, one of the reducers 62 can easily be replaced by loosening the fastener 194 to decouple the reducer 62 from the hammer 58. Once the old reducer 62 is decoupled, a new reducer 62 can be coupled to the hammer 58 with the fastener 194. During the replacement of a reducer 62, the hammer 58 and the collar 106 remain secured in the drum 52.

If the hammer 58 becomes worn down, breaks, or needs to be inspected, the hammer 58 can be easily replaced by first removing any reducers 62 or caps 198 that are coupled to the hammer 58 and then loosening the fasteners 214 in the first collar 106a and the second collar 106b. Loosening the fastener 214 unwedges the hammer 58 such that the hammer 58 can then be easily slid out of the collars 106a, 106b and the drum 52.

Although the assembly method of the reducing rotor system 50 is described in sequential steps, it will be appreciated that some of the steps may be completed in a different order, some of the steps may be completed simultaneously, and some of the steps may be omitted.

In addition, unless the context of their usage unambiguously indicates otherwise, the articles "a" and "an" should not be interpreted as meaning "one" or "only one." Rather these articles should be interpreted as meaning "at least one" or "one or more."

## Claims

1. A method of assembling a rotary material reduction tool, comprising:
providing a drum (52) having an outer surface (74) extending about a rotational axis (54) of the drum (52);
assembling a collar (106a) from an outside of the drum (52) into a first opening (82a) in the outer surface (74) of the drum (52) until a first portion of the collar (106a) extends into the drum (52) and a flange (150) of the collar (106a) extends beyond the first opening (82a) and along the outer surface (74) of the drum (52);
welding the flange (150) of the collar (106a) and the outer surface (74) of the drum (52) together;
inserting a hammer (58) through the collar (106a) such that a portion of the hammer (58) remains exposed; and
securing the hammer (58) to the collar (106a).

2. The method of claim 1, wherein welding the flange (150) of the collar (106a) and the outer surface (74) of the drum (52) together includes depositing multiple weld passes.

3. The method of claim 1 or 2, further comprising situating a second collar (106b) into a second opening in the outer surface (74) of the drum (52) until a portion of the second collar (106b) extends into the drum (52) and a flange (150) of the second collar (106b) extends outside the drum (52) wherein the second opening is opposite the first opening (82a).

4. The method of claim 3, further comprising press fitting a sleeve (174) into the collar (106a), the sleeve (174) extending between the collar (106a) and the second collar (106b).

5. The method of any preceding claim, wherein the hammer (58) is secured to the collar (106a) by tightening a fastener (214) into one side of the collar (106a) to wedge (212) the hammer (58) into the collar (106a).

6. The method of any preceding claim, further comprising securing a wear plate (90) to the outer surface (74) of the drum (52), and the wear plate (90) is preferably secured to the outer surface (74) of the drum (52) by welding.

7. The method of claim 6, wherein the collar (106a), the wear plate (90), and the outer surface (74) of the drum (52) are welded together.

8. A rotary material reduction tool comprising:
a drum (52) having an outer surface (74) extending about a rotational axis (54) of the drum (52), the drum (52) having a first opening (82a) in the outer surface (74) of the drum (52);
a collar (106a) received in the first opening (82a), wherein a first portion of the collar (106a) extends into the drum (52) and a flange (150) of the collar (106a) extends beyond the first opening (82a) and along the outer surface (74) of the drum (52); and
a hammer (58) extending through the collar (106a) and into the drum (52), the hammer (58) having an exposed portion,
**characterized in that**,
the flange (150) of the collar (106a) and the outer surface (74) of the drum (52) are welded together.

9. The rotary material reduction tool of claim 8, further comprising a second collar (106b) coupled to a second opening in the outer surface (74) of the drum (52), the second opening is opposite the first opening (82a), a first portion of the second collar (106b) extending into the drum (52) and a flange (150) of the second collar (106b) extending outside the drum (52).

10. The rotary material reduction tool of claim 8 or 9, further comprising a wear plate (90) secured to on the outer surface (74) of the drum (52), and preferably wherein the collar (106a), the wear plate (90), and the outer surface (74) of the drum (52) are welded together.

11. The rotary material reduction tool of any one of claims 8 to 10, wherein an outer periphery of the collar (106a) forms a curved surface.

12. The rotary material reduction tool of any one of claims 8 to 11, wherein the flange (150) extends beyond an entire periphery of the first opening (82a).

13. The rotary material reduction tool of any one of claims 8 to 12, further comprising a sleeve (174) extending at least partially between the first opening (82a) and a second opening in the outer surface (74), the second opening is opposite the first opening (82a), and the hammer (58) is at least partially positioned within the sleeve (174).

14. The rotary material reduction tool of any one of claims 8 to 13, wherein the collar (106a) includes a wedging side and a support side (114), wherein the wedging side includes a fastener (214) and a wedging assembly, the wedging assembly securing the hammer (58) to the collar (106a) when the fastener (214) is secured, and preferably wherein the support side (114) is an entirely solid structure, without any openings.

15. The rotary material reduction tool of any one of claims 8 to 14, wherein the collar (106a) is a monolithic forging.

## Patentansprüche

1. Verfahren zum Zusammenbauen eines rotierenden Materialreduktionswerkzeugs, umfassend:
Bereitstellen einer Trommel (52), die eine Außenoberfläche (74) aufweist, die sich um eine Drehachse (54) der Trommel (52) herum erstreckt;
Montieren eines Kragens (106a) von einer Außenseite der Trommel (52) in eine erste Öffnung (82a) in der Außenoberfläche (74) der Trommel (52), bis sich ein erster Abschnitt des Kragens (106a) in die Trommel (52) erstreckt und sich ein Flansch (150) des Kragens (106a) über die erste Öffnung (82a) hinaus und entlang der Außenoberfläche (74) der Trommel (52) erstreckt;
Aneinanderschweißen des Flansches (150) des Kragens (106a) und der Außenoberfläche (74) der Trommel (52);
derartiges Einführen eines Hammers (58) durch den Kragen (106a), dass ein Abschnitt des Hammers (58) freiliegend bleibt; und
Sichern des Hammers (58) an dem Kragen (106a).

2. Verfahren nach Anspruch 1, wobei das Aneinanderschweißen des Flansches (150) des Kragens (106a) und der Außenoberfläche (74) der Trommel (52) ein Auftragen mehrerer Schweißgänge einschließt.

3. Verfahren nach Anspruch 1 oder 2, ferner umfassend ein Anordnen eines zweiten Kragens (106b) in einer zweiten Öffnung in der Außenoberfläche (74) der Trommel (52), bis sich ein Abschnitt des zweiten Kragens (106b) in die Trommel (52) erstreckt und sich ein Flansch (150) des zweiten Kragens (106b) außerhalb der Trommel (52) erstreckt, wobei die zweite Öffnung der ersten Öffnung (82a) gegenüberliegt.

4. Verfahren nach Anspruch 3, ferner umfassend ein Einpressen einer Hülse (174) in den Kragen (106a), wobei sich die Hülse (174) zwischen dem Kragen (106a) und dem zweiten Kragen (106b) erstreckt.

5. Verfahren nach einem der vorstehenden Ansprüche, wobei der Hammer (58) an dem Kragen (106a) durch ein Festziehen eines Befestigungselements (214) in eine Seite des Kragens (106a) gesichert ist, um den Hammer (58) in den Kragen (106a) einzukeilen (212).

6. Verfahren nach einem der vorstehenden Ansprüche, ferner umfassend das Sichern einer Verschleißplatte (90) an der Außenoberfläche (74) der Trommel (52), und wobei die Verschleißplatte (90) vorzugsweise durch Schweißen an der Außenoberfläche (74) der Trommel (52) gesichert ist.

7. Verfahren nach Anspruch 6, wobei der Kragen (106a), die Verschleißplatte (90) und die Außenoberfläche (74) der Trommel (52) aneinandergeschweißt sind.

8. Rotierendes Materialreduktionswerkzeug, umfassend:
eine Trommel (52), die eine Außenoberfläche (74) aufweist, die sich um eine Drehachse (54) der Trommel (52) herum erstreckt, wobei die Trommel (52) eine erste Öffnung (82a) in der Außenoberfläche (74) der Trommel (52) aufweist;
einen Kragen (106a), der in der ersten Öffnung (82a) aufgenommen ist, wobei sich ein erster Abschnitt des Kragens (106a) in die Trommel (52) erstreckt und sich ein Flansch (150) des Kragens (106a) über die erste Öffnung (82a) hinaus und entlang der Außenoberfläche (74) der Trommel (52) erstreckt; und
einen Hammer (58), der sich durch den Kragen (106a) und in die Trommel (52) erstreckt, wobei der Hammer (58) einen freiliegenden Abschnitt aufweist,
**dadurch gekennzeichnet, dass** der Flansch (150) des Kragens (106a) und die Außenoberfläche (74) der Trommel (52) aneinandergeschweißt sind.

9. Rotierendes Materialreduktionswerkzeug nach Anspruch 8, ferner umfassend einen zweiten Kragen (106b), der an eine zweite Öffnung in der Außenoberfläche (74) der Trommel (52) gekoppelt ist, wobei die zweite Öffnung der ersten Öffnung (82a) gegenüberliegt, wobei sich ein erster Abschnitt des zweiten Kragens (106b) in die Trommel (52) erstreckt und sich ein Flansch (150) des zweiten Kragens (106b) außerhalb der Trommel (52) erstreckt.

10. Rotierendes Materialreduktionswerkzeug nach Anspruch 8 oder 9, ferner umfassend eine Verschleißplatte (90), die an der Außenoberfläche (74) der Trommel (52) gesichert ist, und vorzugsweise wobei der Kragen (106a), die Verschleißplatte (90) und die Außenoberfläche (74) der Trommel (52) aneinandergeschweißt sind.

11. Rotierendes Materialreduktionswerkzeug nach einem der Ansprüche 8 bis 10, wobei ein Außenumfang des Kragens (106a) eine gekrümmte Oberfläche ausbildet.

12. Rotierendes Materialreduktionswerkzeug nach einem der Ansprüche 8 bis 11, wobei sich der Flansch (150) über einen gesamten Umfang der ersten Öffnung (82a) hinaus erstreckt.

13. Rotierendes Materialreduktionswerkzeug nach einem der Ansprüche 8 bis 12, ferner umfassend eine Hülse (174), die sich mindestens teilweise zwischen der ersten Öffnung (82a) und einer zweiten Öffnung in der Außenoberfläche (74) erstreckt, wobei die zweite Öffnung der ersten Öffnung (82a) gegenüberliegt und der Hammer (58) mindestens teilweise innerhalb der Hülse (174) positioniert ist.

14. Rotierendes Materialreduktionswerkzeug nach einem der Ansprüche 8 bis 13, wobei der Kragen (106a) eine Keilseite und eine Stützseite (114) einschließt, wobei die Keilseite ein Befestigungselement (214) und eine Keilanordnung einschließt, wobei die Keilanordnung den Hammer (58) an dem Kragen (106a) sichert, wenn das Befestigungselement (214) gesichert ist, und wobei vorzugsweise die Stützseite (114) eine vollständig massive Struktur ohne jegliche Öffnungen ist.

15. Rotierendes Materialreduktionswerkzeug nach einem der Ansprüche 8 bis 14, wobei der Kragen (106a) ein monolithisches Schmiedeteil ist.

## Revendications

1. Procédé d'assemblage d'un outil de réduction de matière rotatif, comprenant :
la fourniture d'un tambour (52) ayant une surface externe (74) s'étendant autour d'un axe de rotation (54) du tambour (52) ;
l'assemblage d'un collier (106a) depuis un extérieur du tambour (52) dans une première ouverture (82a) dans la surface externe (74) du tambour (52) jusqu'à ce qu'une première partie du collier (106a) s'étende dans le tambour (52) et qu'une bride (150) du collier (106a) s'étende au-delà de la première ouverture (82a) et le long de la surface externe (74) du tambour (52) ;
le soudage ensemble de la bride (150) du collier (106a) et de la surface externe (74) du tambour (52) ;
l'insertion d'un marteau (58) à travers le collier (106a) de telle sorte qu'une partie du marteau (58) reste exposée ; et
la fixation du marteau (58) au collier (106a).

2. Procédé selon la revendication 1, dans lequel le soudage ensemble de la bride (150) du collier (106a) et de la surface externe (74) du tambour (52) comporte le dépôt de plusieurs passes de soudage.

3. Procédé selon la revendication 1 ou 2, comprenant en outre le positionnement d'un second collier (106b) dans une seconde ouverture dans la surface externe (74) du tambour (52) jusqu'à ce qu'une partie du second collier (106b) s'étende dans le tambour (52) et qu'une bride (150) du second collier (106b) s'étende à l'extérieur du tambour (52), dans lequel la seconde ouverture est opposée à la première ouverture (82a).

4. Procédé selon la revendication 3, comprenant en outre l'ajustement à la presse d'un manchon (174) dans le collier (106a), le manchon (174) s'étendant entre le collier (106a) et le second collier (106b).

5. Procédé selon une quelconque revendication précédente, dans lequel le marteau (58) est fixé au collier (106a) en serrant un élément de fixation (214) dans un côté du collier (106a) pour caler (212) le marteau (58) dans le collier (106a).

6. Procédé selon une quelconque revendication précédente, comprenant en outre la fixation d'une plaque d'usure (90) à la surface externe (74) du tambour (52), et la plaque d'usure (90) est de préférence fixée à la surface externe (74) du tambour (52) par soudage.

7. Procédé selon la revendication 6, dans lequel le collier (106a), la plaque d'usure (90) et la surface externe (74) du tambour (52) sont soudés ensemble.

8. Outil de réduction de matière rotatif comprenant :
un tambour (52) ayant une surface externe (74) s'étendant autour d'un axe de rotation (54) du tambour (52), le tambour (52) ayant une première ouverture (82a) dans la surface externe (74) du tambour (52) ;
un collier (106a) reçu dans la première ouverture (82a), dans lequel une première partie du collier (106a) s'étend dans le tambour (52) et une bride (150) du collier (106a) s'étend au-delà de la première ouverture (82a) et le long de la surface externe (74) du tambour (52) ; et
un marteau (58) s'étendant à travers le collier (106a) et dans le tambour (52), le marteau (58) ayant une partie exposée,
**caractérisé en ce que**, la bride (150) du collier (106a) et la surface externe (74) du tambour (52) sont soudées ensemble.

9. Outil de réduction de matière rotatif selon la revendication 8, comprenant en outre un second collier (106b) accouplé à une seconde ouverture dans la surface externe (74) du tambour (52), la seconde ouverture est opposée à la première ouverture (82a), une première partie du second collier (106b) s'étendant dans le tambour (52) et une bride (150) du second collier (106b) s'étendant à l'extérieur du tambour (52).

10. Outil rotatif de réduction de matière selon la revendication 8 ou 9, comprenant en outre une plaque d'usure (90) fixée sur la surface externe (74) du tambour (52), et de préférence dans lequel le collier (106a), la plaque d'usure (90) et la surface externe (74) du tambour (52) sont soudés ensemble.

11. Outil de réduction de matière rotatif selon l'une quelconque des revendications 8 à 10, dans lequel une périphérie externe du collier (106a) forme une surface incurvée.

12. Outil de réduction de matière rotatif selon l'une quelconque des revendications 8 à 11, dans lequel la bride (150) s'étend au-delà de toute une périphérie de la première ouverture (82a).

13. Outil de réduction de matière rotatif selon l'une quelconque des revendications 8 à 12, comprenant en outre un manchon (174) s'étendant au moins partiellement entre la première ouverture (82a) et une seconde ouverture dans la surface externe (74), la seconde ouverture est opposée à la première ouverture (82a), et le marteau (58) est au moins partiellement positionné au sein du manchon (174).

14. Outil de réduction de matière rotatif selon l'une quelconque des revendications 8 à 13, dans lequel le collier (106a) comporte un côté de calage et un côté de support (114), dans lequel le côté de calage comporte un élément de fixation (214) et un ensemble de calage, l'ensemble de calage fixant le marteau (58) au collier (106a) lorsque l'élément de fixation (214) est fixé, et de préférence dans lequel le côté de support (114) est une structure entièrement pleine, sans ouverture quelconque.

15. Outil de réduction de matière rotatif selon l'une quelconque des revendications 8 à 14, dans lequel le collier (106a) est une pièce forgée monolithique.
